# EUROPÄISCHE PATENTSCHRIFT

(11) **EP 1 838 469 B1**
(45) Veröffentlichungstag und Bekanntmachung des Hinweises auf die Patenterteilung: **10.06.2009**
(21) Anmeldenummer: 06776129.6
(22) Anmeldetag: 05.07.2006
(51) Int. Cl.: B21B 27/03

(54) **STÜTZWALZE FÜR EIN WALZWERK**
SUPPORT ROLL FOR A ROLLING MILL
CYLINDRE D'APPUI POUR LAMINOIR

(30) Priorität: 07.07.2005 DE 102005032126; 20.01.2006 DE 102006002773
(43) Veröffentlichungstag der Anmeldung: 03.10.2007
(73) Patentinhaber: SMS Demag AG, 40237 Düsseldorf (DE)
(72) Erfinder: MÖCKEL, Jörg, 09122 Chemnitz (DE); KLEIN, Achim, 57223 Kreuztal (DE); MÜLLER, Heinz-Adolf, 57234 Wilnsdorf (DE); MÜNKER, Jochen, 57223 Kreuztal (DE); SOHLER, Jörn, 57223 Kreuztal (DE); BERGER, Maik, 09111 Chemnitz (DE)
(74) Vertreter: Klüppel, Walter
(86) Internationale Anmeldenummer: PCT/EP2006/006557
(87) Internationale Veröffentlichungsnummer: WO 2007/006467

(56) Entgegenhaltungen:
- EP-B- 1 056 553
- US-A- 4 407 151
- US-A- 4 683 744
- US-A- 5 347 837
- PATENT ABSTRACTS OF JAPAN Bd. 009, Nr. 268 (M-424), 25. Oktober 1985 (1985-10-25) -& JP 60 115312 A (ISHIKAWAJIMA HARIMA JUKOGYO KK), 21. Juni 1985 (1985-06-21)

## Beschreibung

Die Erfindung betrifft eine Stützwalze für ein Walzwerk, wie Grobblechwalzwerk, Flachwalzwerk oder dergleichen, bestehend aus einer Hülse und einer Walzenwelle / Walzenachse sowie ein Verfahren zur Herstellung einer derartigen Stützwalze.

Bekannte Stützwalzen für Mehrwalzengerüste zum Warm- oder Kaltwalzen auf flacher Bahn werden einteilig hergestellt. Zur Herstellung von Stützwalzen mit mehr als 120 t Gewicht, die insbesondere bei Grobblechgerüsten eingesetzt werden, sind zwei Fertigungsmöglichkeiten bekannt:
a) Die Stützwalze wird gegossen und anschließend in einer Freiformschmiede geschmiedet und bearbeitet.
   - Einstoffwalze -
b) Die Stützwalze wird mittels Verbundgussverfahren gegossen und besteht aus hartem, verschleissfesten Material im Ballenbereich und aus hochwertigem, zähen Material mit hoher Biegewechselfestigkeit im Zapfen und im Kernbereich. Anschließend erfolgt eine mechanische Bearbeitung.
   - Mehrstoffwalze -

Für einteilige Stützwalzen mit mehr als 170 t Gewicht gibt es nur wenige Hersteller, daraus ergeben sich lange Lieferzeiten und hohe Preise.
Nachteilig sind ebenfalls hohe Kosten für den Transport derartiger Stützwalzen infolge des hohen Gewichtes.

Weiterhin muss der gesamte Walzenkörper bei Verschleiß des nutzbaren Ballenbereiches ( verschleißfest ausgeführt ) verschrottet werden.

Neben den einteiligen Stützwalzen sind auch mehrteilige Stützwalzen bekannt.

In der EP 1 056 553 B1 wird ein Walzwerk beschrieben, mit Arbeitswalzen und mehrteiligen Stützwalzen, bestehend aus einem Grundkörper mit mehreren darauf in dessen Längsrichtung nebeneinander angeordneten Wälzlagem, die mit ihren Außenringen eine die Wälzlager umgreifende Hülse drehbar abstützen. Die Hülse liegt mit ihrer Innenoberfläche allseitig an den Außenoberflächen der Außenringe der Wälzlager an. Die Außenoberfläche bildet den Walzballen der Stützwalze, wobei auf der Länge des Grundkörpers drei Wälzlager vorgesehen sind, von denen das mittlere Wälzlager als Kegelrollenlager ausgebildet ist. Die beiden äußeren Wälzlager sind als Zylinderrollenlager ausgebildet und zwischen den beiden Zylinderrollenlagem und dem Grundkörper ist je eine motorisch um die Längsachse des Grundkörpers verdrehbare Exzenterbüchse angeordnet, wobei im Lastbereich des Grundkörpers zwischen diesem und der Exzenterbüchse je ein die Schiefstellung des Zylinderrollenlagers ermöglichendes selbsteinstellbares Kippsegment vorgesehen ist.

In der deutschen Offenlegungsschrift 1 602 121 ist eine mehrteilige Stützwalze für Quartogerüste zum Auswalzen metallischer Flachprodukte beschrieben, bei der die von der Stützwalze aufzunehmenden Walzkräfte nur an zwei Stellen innerhalb des Breitenbereiches des Walzballens vom Stützwalzenmantel auf die Achse bzw. Welle übertragen werden.

Durch die EP 0 896 841 A2 ist ein Walzwerk mit Arbeitswalzen und mehrteiligen Stützwalzen bekannt geworden, bestehend aus einem Grundkörper mit mehreren darauf in dessen Längsrichtung nebeneinander angeordneten Wälzlagem, die mit ihren Außenringen eine die Wälzlager umgreifende Hülse drehbar abstützen. Die Außenoberfläche bildet den Walzballen der Stützwalze, wobei der Grundkörper um seine Längsachse verdrehbar ist und in etwa der Breite der Wälzlager entsprechende zylindrische Abschnitte aufgeteilt ist, deren parallel zueinander verlaufende Zylinderachsen jeweils benachbarter Abschnitte zueinander versetzt sind. Die Hülse mit ihrer Innenoberfläche liegt allseitig an den Außenoberflächen der Außenringe der Wälzlager an und erhält dadurch eine Exzentrizität, die sich aus der Exzentrizität der Abschnitte des Grundköpers vermindert durch den Rück - Biegeeinfluss der Hülse ergibt.

Eine derartige Anordnung ist auch in der EP 1 058 616 B1 beschrieben.

Aus der DE 197 02 325 A1 ist ein Verfahren zur Herstellung von schwingungsgedämpften Walzen bekannt. Hierbei wird in zumindest einer Stützwalze und oder einer zugeordneten Arbeitswalze zur Veränderung der Werte der Eigenschwingungsfrequenzen zumindest einer Walze zumindest ein achsparalleler Hohlraum ausgebildet. Bei einem erfindungsgemäßen Walzensatz bestehend aus zumindest je einer Arbeits- und Stützwalze ist zumindest eine Walze mit zumindest einem achsparallelen Hohlraum versehen.

Aus der EP 0 937 515 B1 ist eine Walze bekannt, bestehend aus einem rotierenden Walzmantel mit innerhalb des Walzmantels angeordneten Mitteln zur Beeinflussung der Biegesteifigkeit des Walzmantels. Bei den Beeinflussungsmitteln handelt es sich um ein Gleitlager in Form eines Rotationskörpers, der drehbar einstellbar und so geformt ist, dass seine der beanspruchten Zone des Walzmantels entsprechenden Belastungsfläche Teil der Mantelfläche eines rotationssymmetrischen Körpers ist und die Berandung dieser Mantelfläche so gestaltet ist, dass längs des Umfanges des Rotationskörpers Breite und / oder Lage der Belastungsfläche variieren. Der Rotationskörper weist im Bereich seiner Belastungsfläche mindestens eine Aussparung auf, deren Berandungsverlauf sowie deren Innenkontur beliebig geformt ist.

Diese bekannten mehrteiligen Ausführungen bzw. Konstruktionen von Stützwalzen sind als Mantelwalzen ausgebildet. D.h. eine äußere Hülse oder dergleichen rotiert um eine innere Welle / Achse oder dergleichen.

Bei Stützwalzen mit einem großen Gesamtgewicht, die nach diesen bekannten Ausführungen hergestellt werden, liegen ebenfalls die oben genannten Nachteile in Bezug auf Transport usw. vor, wie bei einer einteiligen Ausführung.

Der Erfindung liegt daher die Aufgabe zugrunde, die bekannten Stützwalzen in der Herstellung zu vereinfachen, die Lieferzeit zu verkürzen, die Lebensdauer zu erhöhen und die oben genannten Nachteile wie Transportkosten zu reduzieren.

Diese Aufgabe wird erfindungsgemäß dadurch gelöst, dass bei einer Stützwalze für ein Walzwerk, wie Grobblechwalzwerk, Flachwalzwerk oder dergleichen, bestehend aus einer Hülse und einer alzenwelle / Walzenachse, die Walzenwelle / die Walzenachse aus einem linken Halbzapten und einem rechtem Halbzapfen ausgebildet ist.

Weitere Ausgestaltungen der Stützwalze ergeben sich aus den diesbezüglichen Unteransprüchen.

In einer Weiterentwicklung sind in den Halbzapfen eine oder mehrere Bohrungen vorgesehen. Diese verlaufen achsparallel und sind beispielsweise symmetrisch angeordnet. Ist nur eine Bohrung vorgesehen, so ist die Bohrungsachse identisch mit der Längsachse des Halbzapfens. In einer ersten Ausführung sind beide Halbzapfen mit Durchgangsbohrungen ausgebildet, in die ein Zugstab / eine Zugstange eingebracht wird, um die beiden Halbzapfen gegeneinander zu verspannen.

In einer weiteren Ausführung ist ein Halbzapfen mit Durchgangsbohrungen und der andere Halbzapfen mit Gewindebohrungen ausgebildet, in die Gewindestangen / Vorspannschrauben eingedreht werden.

Die Halbzapfen sind einer ersten Ausführung in dem Bereich, der von der Hülse umgeben wird, zylindrisch ausgebildet. In einer weiteren Ausführung ist dieser Bereich kegelstumpfförmig ausgebildet. Dabei ist beispielsweise ein Kegelsitz mit einem kleinen Kegelwinkel vorgesehen, der selbsthemmend ausgebildet ist. Eine andere Ausgestaltung sieht vor, dass zwischen den beiden Halbzapfen eine Buchse angeordnet ist. Diese Buchse ermöglicht es, unterschiedlich lange Stützwalzen mit gleichen Halbzapfen herzustellen. Die unterschiedlichen Längen der Hülsen werden durch eine oder mehrere angepasste Buchsen überbrückt.

Zur weiteren Vereinfachung kann eine Buchse mit der Gewindebohrung oder den Gewindebohrungen ausgebildet sein. Die Halbzapfen sind dann nur mit Durchgangsbohrungen ausgebildet.

Die Erfindung betrifft außerdem ein Verfahren zur Herstellung einer Stützwalze, bestehend aus einer Hülse und einer mehrteiligen Walzenwelle / Walzenachse.

Das erfindungsgemäße Herstellungsverfahren sieht vor, dass die Hülse Innen angewärmt wird und sich somit ausdehnt. Anschließend werden die Halbzapfen in die Hülse eingesetzt und an die rechte und die linke Stirnwand der Hülse geschoben. Zur genauen Positionierung weisen die Halbzapfen beispielsweise mindestens eine Anlagekante auf ihrem Umfang auf. Die Stützwalze, bestehend aus Hülse, rechtem Halbzapfen und linkem Halbzapfen, wird nach dem Erkalten der Hülse durch eine Schrumpfverbindung zusammengehalten. Es liegt eine biegesteife Stützwalze vor.

Weitere Ausgestaltungen des Verfahrens ergeben sich aus den diesbezüglichen Unteransprüchen.

Wenn die Hülse eine festgelegte Verschleißgrenze erreicht hat, werden die beiden Halbzapfen und ggfs. die Vorspannschraube oder die Vorspannschrauben von der Hülse getrennt. Durch die erfindungsgemäße Ausbildung der Stützwalze kann der rechte Halbzapfen und der linke Halbzapfen sowie die Vorspannschraube / die Vorspannschrauben weiter verwendet werden.

Durch die erfindungsgemäßen Ausgestaltungen der Stützwalze in Hülse, rechter Halbzapfen, linker Halbzapfen und Vorspannschraube bzw. Vorspannschrauben usw. besteht außerdem der Vorteil, diese Einzelteile getrennt zum Einsatzort, einem Walzwerk oder dergleichen, zu transportieren. Dort wird die Stützwalze vor Ort zusammengebaut / zusammengefügt.

Ausführungsbeispiele der Erfindung wird anhand von sehr schematischen Zeichnungen näher beschrieben. Es zeigen:
- Fig. 1: in räumlicher, geschnittener Ansicht eine mehrteilige Stützwalze,
- Fig. 2: in räumlicher, geschnittener Ansicht eine erfindungsgemäße Stützwalze, bei der die Hülse mit einem Lagerzapfen ausgebildet ist,
- Fig. 3: in räumlicher, geschnittener Ansicht eine erfindungsgemäße Stützwalze mit Ballen- bzw. Schrumpfringen,
- Fig. 4: in räumlicher, geschnittener Ansicht eine Stützwalze mit Hohlraum,
- Fig. 5: in räumlicher, geschnittener Ansicht eine zweiteilige Ausführung und
- Fig. 6: in geschnittener Vorderansicht eine Variante einer Stützwalze nach Figur 4.

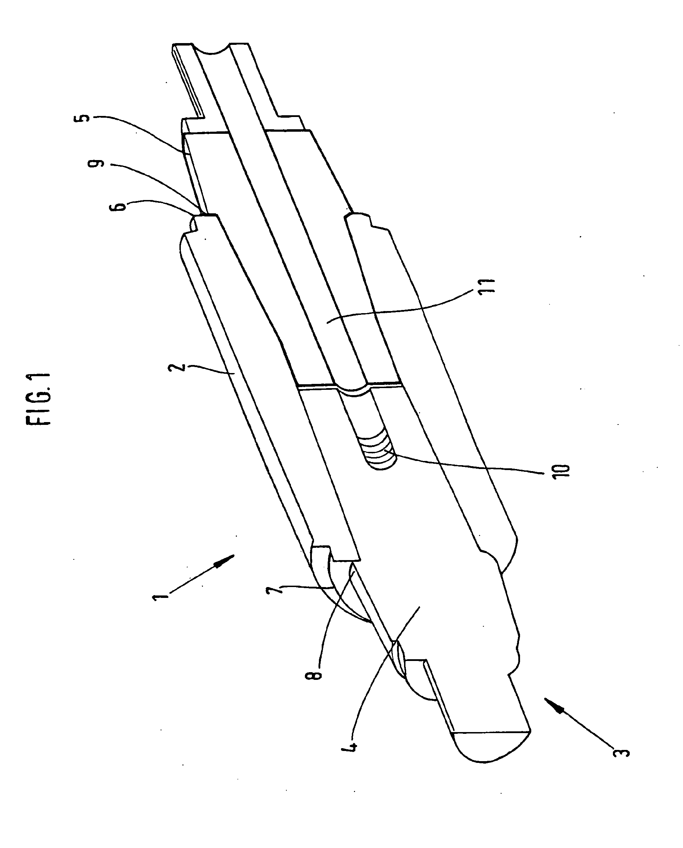

In Figur 1 ist in räumlicher, geschnittener Ansicht eine Stützwalze 1 dargestellt. Die Stützwalze 1 besteht aus einer Hülse 2 und einer Walzenwelle / Walzenachse 3. Die Walzenwelle / Walzenachse 3 wird erfindungsgemäß von einem linken Lagerzapfen 4 und einem rechten Lagerzapfen 5 gebildet. An den äußeren Enden sind Aufnahmen für Lager ausgebildet.

Die Hülse 2 ist Innen, jeweils von den Stirnflächen 6, 7 ausgehend, kegelstumpfförmig ausgebildet. Zur besseren Positionierung der Lagerzapfen 4, 5 in der Hülse 2 sind die Lagerzapfen 4, 5 mit einer Anschlagkante 8, 9 versehen.

In der dargestellten Ausführung weist der linke Lagerzapfen 4 eine Gewindebohrung 10 auf während in dem rechten Lagerzapfen 5 eine Durchgangsbohrung 11 eingebracht ist, durch die eine Vorspannschraube ( nicht dargestellt geführt ist.

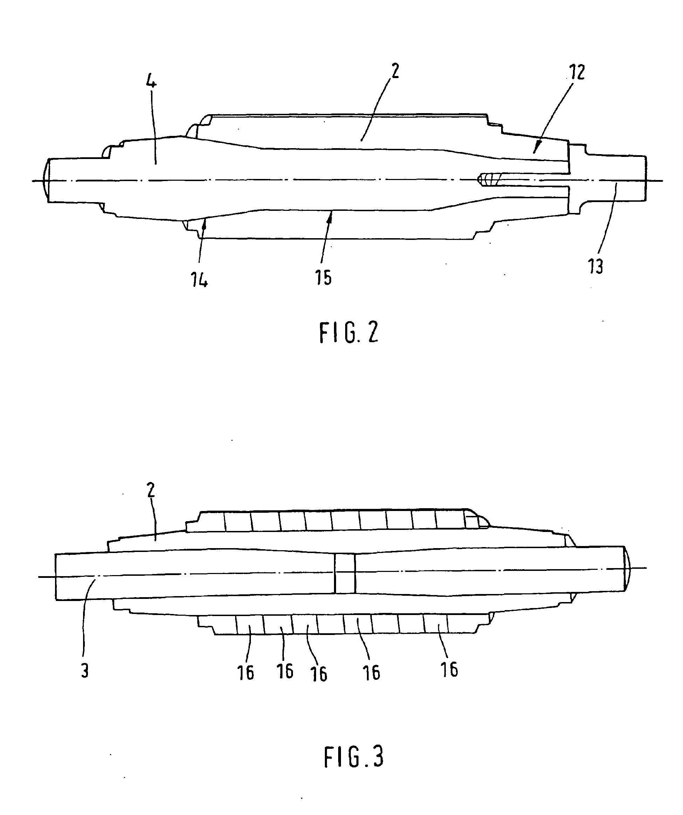

Eine weitere Ausgestaltung ist in Figur 2 zu sehen. Der linke Lagerzapfen 4 ist so gestaltet, dass er über eine große Länge in der Hülse 2 eingebracht ist. Die Hülse 2 ist an ihrem rechten Ende beispielsweise mit einem einseitig angegossenen oder angeschmiedeten Lagerzapfen 12 ausgebildet. Der linke Lagerzapfen 4 und die Hülse 2 sind mittels kombiniertem Kegelschrumpfsitz 14 und / oder zylindrischem Schrumpfsitz 15 verbunden. Der Zusammenhalt dieser dreiteiligen Stützwalze wird durch eine Vorspannschraube 13 erreicht. Der linke Lagerzapfen 4 nimmt direkt ein Radiallager ( nicht dargestellt ) auf.

Der Vorteil dieser Ausführung liegt darin, dass aufgrund der langen Fügung der Teile zueinander ( linker in der Hülse 2 ) die Biegelinien beider Teile angeglichen sind und somit die Spannungen und Verformungen im zulässigen Bereich liegen.

Um den einen kompletten Austausch einer beschädigten bzw. verschlissenen Hülse 2 zu vermeiden, werden, wie in Figur 3 dargestellt, über die gesamte Ballenlänge Ballen- bzw. Schrumpfringe 16 aufgeschrumpft. Dabei werden mehrerer gleich breite oder unterschiedlich breite Ballen- bzw. Schrumpfringe 16 auf abgestufte zylindrische Durchmesser der Hülse 2 aufgeschrumpft. Von Vorteil ist dabei die Möglichkeit des Neuaufschrumpfens von Ballen- bzw. Schrumpfringen 16, wenn diese das Ende ihres Gebrauchdurchmessers nach mehrmaligem Nachschleifen erreicht haben. Die Hülse 2 kann wieder verwendet werden.

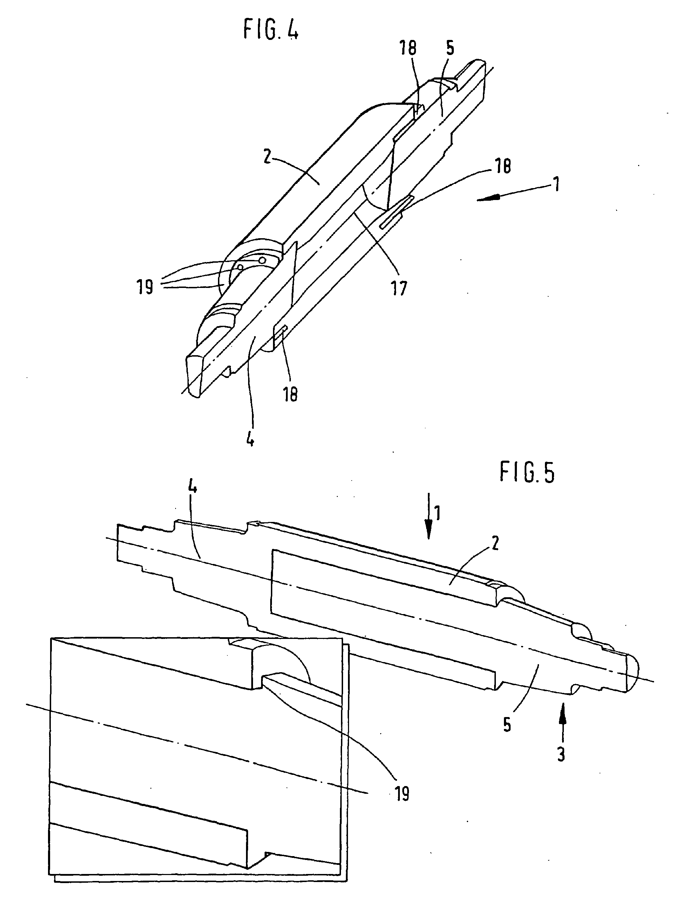

In Figur 4 besteht die Stützwalze 1 aus der Hülse 2 und den Lagerzapfen 4, 5, die nur zu einem geringen Maß in die Hülse 2 eingesteckt werden. Dadurch wird in der Hülse 2 ein Hohlraum 17 gebildet. Die Lagerzapfen 4, 5 sind beispielsweise mittels einer leichten zylindrischen oder kegeligen Passung in der Hülse 2 eingepresst. Zur Sicherung werden die Lagerzapfen 4, 5 durch eine ausreichende Anzahl von Schrauben 18 beidseitig mit der Hülse verschraubt. Der Vorteil dieser Ausführung ist die Möglichkeit, den linken Lagerzapfen 4 und den rechten Lagerzapfen 5 wieder zu verwenden, wenn der Außendurchmesser der Hülse 2 soweit abgeschliffen ist, dass er das Ende seines vorgegebenen Gebrauchsdurchmessers erreicht hat. Die Einrichtungen zum Wechseln der Stützwalze 1 können in den Abmessungen geringer ausgeführt werden, weil die gesamte Stützwalze 1 leichter wie eine Vollwalze ist.

Eine mehrteilige Walzenwelle / Walzenachse 3 bei einer Stützwalze 1 wird, wie in Figur 5 dargestellt, dadurch erreicht, dass der linke Lagerzapfen 4 mit der Hülse 2 einteilig ausgebildet ist. Der rechte Lagerzapfen 5 weist eine Anschlagfläche 19 auf, um die Positionierung der beiden Teile zu ermöglichen. Das Fügen beider Teile geschieht nach vorheriger Erwärmung der zylindrischen Hülse. Nach Einsetzen des Lagerzapfens 5 und anschließender Erkaltung besteht eine feste Verbindung in Form eines Querpressverbandes. Infolge der Reibwirkung ist eine ausreichende axiale Lagefixierung gewährleistet. Eine zusätzliche Sicherung wird, wie schon weiter obem beschrieben, mittels einer Vorspannschraube oder mehreren Vorspannschrauben erreicht. Der Einsatz von einer Vorspannschraube bzw. von Vorspannschrauben ist / sind bei der Montage der Stützwalze hilfreich.

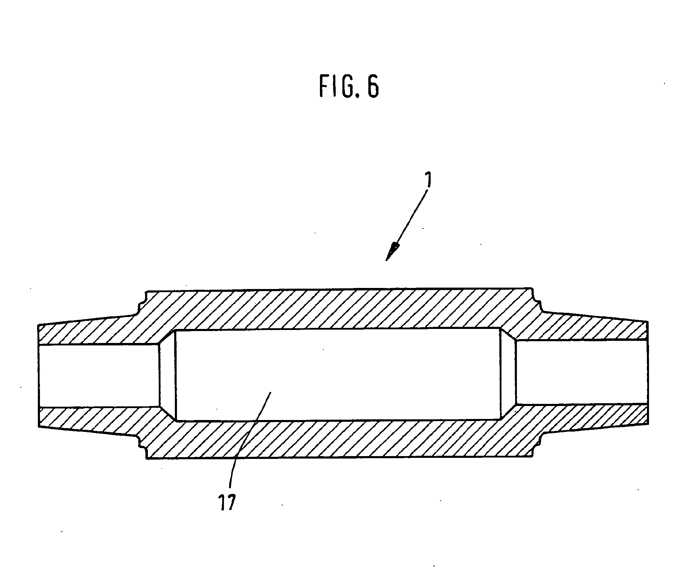

Figur 6 zeigt eine mögliche Variante der Stützwalzenausführung nach Figur 4.

Die Hülse 2 besteht aus einem gegossenen oder über einen Dom geschmiedeten zylindrischen Hohlkörper, der an seinen Enden bereits einteilig mit Bereichen zur Aufnahmen von Lagern ausgebildet ist. Die eigentlichen Lagerzapfen der Walzenwelle / Walzenachse 3 (nicht dargestellt) werden wiederum mittels Schrauben und / oder Fügesitz befestigt. Der Vorteil dieser Ausgestaltung besteht darin, dass das Gewicht der Stützwalze reduziert wird.

### Bezugszeichenliste

- 1.: Stützwalze
- 2.: Hülse
- 3.: Walzenwelle / Walzenachse
- 4.: linker Halbzapfen
- 5.: rechter Halbzapfen
- 6.: Stirnfläche
- 7.: Stirnfläche
- 8.: Anschlagkante
- 9.: Anschlagkante
- 10.: Gewindebohrung
- 11.: Durchgangsbohrung
- 12.: Lagerzapfen
- 13.: Vorspannschraube
- 14.: Kegelschrumpfsitz
- 15.: zylindrischer Schrumpfsitz
- 16.: Ballen- bzw. Schrumpfringe
- 17.: Hohlraum
- 18.: Schrauben
- 19.: Anschlagfläche

## Patentansprüche

1. Stützwalze (1) für ein Walzwerk, wie Grobblechwalzwerk, Flachwalzwerk oder dergleichen, bestehend aus einer Hülse (2) und einer Walzenwelle / Walzenachse (3),
**dadurch gekennzeichnet,**
**dass** die Walzenwelle / Walzenachse (3) aus einem linken Halbzapfen (4) und einem rechten Halbzapfen (5) ausgebildet ist.

2. Stützwalze (1) nach Anspruch 1,
**dadurch gekennzeichnet,**
**dass** die Walzenwelle / Walzenachse (3) aus einem linken Lagerzapfen (4) und einem rechten Lagerzapfen (5) mit mindestens einer dazwischen angeordneten Buchse ausgebildet ist.

3. Stützwalze (1) nach Anspruch 2,
**dadurch gekennzeichnet,**
**dass** einer der Lagerzapfen (4, 5) mit mindesten einer, achsparallelen Durchgangsbohrung (11) ausgebildet sind.

4. Stützwalze (1) nach Anspruch 2 oder 3,
**dadurch gekennzeichnet,**
**dass** einer der Lagerzapfen (4,5) mit einer Gewindebohrung (10) ausgebildet ist.

5. Stützwalze (1) nach einem der Ansprüche 1 bis 4,
**dadurch gekennzeichnet,**
**dass** die Hülse (2) Innen zylindrisch ausgebildet ist.

6. Stützwalze (1) nach einem der Ansprüche 1 bis 4,
**dadurch gekennzeichnet,**
**dass** die Hülse (2) Innen kegelstumpfförmig ausgebildet ist.

7. Stützwalze (1) nach einem der Ansprüche 1 bis 6,
**dadurch gekennzeichnet,**
**dass** die Hülse (2) aus einem hochwertigen, gegossenen und / oder geschmiedeten Vergütungsstahl gebildet ist.

8. Stützwalze (1) nach einem der Ansprüche 1 bis 7,
**dadurch gekennzeichnet,**
**dass** die Hülse (2) auf ihrer äußeren Umfangsfläche mit einer verschleißfesten Auftragsschweißung ausgebildet ist.

9. Stützwalze (1) nach einem der Ansprüche 1 bis 7,
**dadurch gekennzeichnet,**
**dass** die Hülse (2) auf ihrer äußeren Umfangsfläche mit mehreren Ballen- bzw. Schrumpfringen (16) ausgebildet ist.

10. Stützwalze (1) nach einem der Ansprüche 1 bis 9,
**dadurch gekennzeichnet,**
**dass** die Hülse (2) an einem Ende mit einem Lagerzapfen (12) ausgebildet ist.

11. Verfahren zum Herstellen einer Stützwalze (1) nach einem der Ansprüche 1 bis 10,
**dadurch gekennzeichnet,**
**dass** die Hülse (1) von innen erwärmt wird, ein rechter Lagerzapfen (5) und ein linker Lagerzapfen (4) in die Hülse (1) eingesetzt werden und die Hülse (1) anschließend erkaltet.

12. Verfahren nach Anspruch 11,
**dadurch gekennzeichnet,**
**dass** der rechte Lagerzapfen (5) und der linke Lagerzapfen (4) durch mindestens eine Zugstange, Vorspannschraube oder dergleichen miteinander verspannt werden.

13. Verfahren nach Anspruch 11 oder 12,
**dadurch gekennzeichnet,**
**dass** die Zugstange, Verspannschraube oder dergleichen in eine Gewindebohrung (10), die in eine der beiden Lagerzapfen (4, 5) eingebracht ist, geschraubt wird.

14. Verfahren nach einem der Ansprüche 11 bis 13,
**dadurch gekennzeichnet,**
**dass** innerhalb der Hülse (2), zwischen den Lagerzapfen (4, 5), mindestens eine Buchse angeordnet wird.

15. Verfahren nach einem der Ansprüche 11 bis 14,
**dadurch gekennzeichnet,**
**dass** die Außenfläche der Hülse (2) mit einer verschleißfesten Auftragsschweißung versehen wird.

16. Verfahren nach einem der Ansprüche 11 bis 15,
**dadurch gekennzeichnet,**
**dass** jeder Lagerzapfen (4, 5) mit einer Anschlagkante (8, 9) an die Stirnfläche (6, 7) der Hülse (2) angelegt wird.

## Claims

1. Backing roll (1) for a rolling mill, such as a heavy plate rolling mill, sheet rolling mill or the like, which consists of a sleeve (2) and a roll shaft / roll axle (3), **characterised in that** the roll shaft / roll axle (3) is constructed from a lefthand half pin (4) and a righthand half pin (5).

2. Backing roll (1) according to claim 1, **characterised in that** the roll shaft / roll axle (3) is constructed from a lefthand bearing pin (4) and a righthand bearing pin (5) with at least one bush arranged therebetween.

3. Backing roll (1) according to claim 2, **characterised in that** one of the bearing pins (4, 5) is formed with at least one through bore (11) parallel to the axis.

4. Backing roll (1) according to claim 2 or claim 3, **characterised in that** one of the bearing pins (4, 5) is formed with a threaded bore (10).

5. Backing roll (1) according to any one of claims 1 to 4, **characterised in that** the sleeve (2) is internally formed to be cylindrical.

6. Backing roll (1) according to any one of claims 1 to 4, **characterised in that** the sleeve (2) is internally formed to be frusto-conical.

7. Backing roll (1) according to any one of claims 1 to 6, **characterised in that** the sleeve (2) is made of high-grade, cast and/or forged steel that has been hardened and tempered.

8. Backing roll (1) according to any one of claims 1 to 7, **characterised in that** the sleeve (2) is formed with a wear-resistant build-up weld on its outer circumferential surface.

9. Backing roll (1) according to any one of claims 1 to 7, **characterised in that** the sleeve (2) is formed with several barrel or shrink rings (16) on its outer circumferential surface.

10. Backing roll (1) according to any one of claims 1 to 9, **characterised in that** the sleeve (2) is formed at one end with a bearing pin (12).

11. Method of producing a backing roll (1) according to any one of claims 1 to 10, **characterised in that** the sleeve (1) is internally heated, a righthand bearing pin (5) and a lefthand bearing pin (4) are inserted into the sleeve (1) and the sleeve (1) is then cooled.

12. Method according to claim 11, **characterised in that** the righthand bearing pin (5) and the lefthand bearing pin (4) are tightened together by at least one tie rod, pretensioning bolt or the like.

13. Method according to claim 11 or claim 12, **characterised in that** the tie rod, pretensioning bolt or the like is screwed into a threaded bore (10), which is formed in one of the two bearing pins (4, 5).

14. Method according to any one of claims 11 to 13, **characterised in that** at least one bush is arranged within the sleeve (2) between the bearing pins (4, 5).

15. Method according to any one of claims 11 to 14, **characterised in that** the outer surface of the sleeve (2) is provided with a wear-resistant build-up weld.

16. Method according to any one of claims 11 to 15, **characterised in that** each bearing pin (4, 5) bears by a stop edge (8, 9) against the end face (6, 7) of the sleeve (2).

## Revendications

1. Cylindre d'appui (1) pour un laminoir, comme un laminoir pour tôles grossières, un laminoir à plat, ou similaire, comprenant une enveloppe (2) et un arbre/axe de cylindre (3),
**caractérisé en ce que** l'arbre/axe de cylindre (3) est réalisé avec un demi-tenon gauche (4) et un demi-tenon droit (5).

2. Cylindre d'appui (1) selon la revendication 1,
**caractérisé en ce que** l'arbre/axe de cylindre (3) est réalisé avec un tenon de palier gauche (4) et un tenon de palier droit (5) avec au moins une douille agencée entre eux.

3. Cylindre d'appui (1) selon la revendication 2,
**caractérisé en ce que** l'un des tenons de palier (4, 5) est réalisé avec au moins un perçage traversant (11) parallèle à l'axe.

4. Cylindre d'appui (1) selon la revendication 2 ou 3,
**caractérisé en ce que** l'un des tenons de palier (4, 5) est réalisé avec un perçage taraudé (10).

5. Cylindre d'appui (1) selon l'une des revendications 1 à 4,
**caractérisé en ce que** la douille (2) est réalisée cylindrique à l'intérieur.

6. Cylindre d'appui (1) selon l'une des revendications 1 à 4,
**caractérisé en ce que** la douille (2) est réalisée à l'intérieur en forme de tronc de cône.

7. Cylindre d'appui (1) selon l'une des revendications 1 à 6,
**caractérisé en ce que** la douille (2) est réalisée en acier traité de haute valeur, coulé et/ou forgé.

8. Cylindre d'appui (1) selon l'une des revendications 1 à 7,
**caractérisé en ce que** la douille (2) est réalisée sur sa surface périphérique extérieure avec soudage d'un matériau d'apport résistant à l'usure.

9. Cylindre d'appui (1) selon l'une des revendications 1 à 7,
**caractérisé en ce que** la douille (2) est réalisée sur sa surface périphérique extérieure avec plusieurs bagues de corps ou bagues de frettage (16).

10. Cylindre d'appui (1) selon l'une des revendications 1 à 9,
**caractérisé en ce que** la douille (2) est réalisée à une extrémité avec un tenon de palier (12).

11. Procédé pour réaliser un cylindre d'appui (1) selon l'une des revendications 1 à 10,
**caractérisé en ce que** la douille (1) est réchauffée de l'intérieur, un tenon de palier droit (5) et un tenon de palier gauche (4) sont introduits dans la douille (1), et la douille (1) est ensuite refroidie.

12. Procédé selon la revendication 11,
**caractérisé en ce que** le tenon de palier droit (5) et le tenon de palier gauche (4) sont serrés l'un contre l'autre par au moins une tige de traction, une vis de serrage, ou similaire.

13. Procédé selon la revendication 11 ou 12,
**caractérisé en ce que** la tige de traction, la vis de serrage ou similaire est vissée dans un perçage taraudé (10) qui est ménagé dans l'un des deux tenons de palier (4, 5).

14. Procédé selon l'une des revendications 11 à 13,
**caractérisé en ce qu'**au moins un manchon est agencé à l'intérieur de la douille (2), entre les tenons de palier (4, 5).

15. Procédé selon l'une des revendications 11 à 14,
**caractérisé en ce que** la surface extérieure de la douille (2) est pourvue d'un matériau d'apport soudé résistant à l'usure.

16. Procédé selon l'une des revendications 11 à 15,
**caractérisé en ce que** chaque tenon de palier (4, 5) est appliqué avec une arête de butée (8, 9) contre la face frontale (6, 7) de la douille (2).
